# EUROPÄISCHE PATENTSCHRIFT

(11) **EP 3 239 399 B1**
(45) Veröffentlichungstag und Bekanntmachung des Hinweises auf die Patenterteilung: **22.05.2019**
(21) Anmeldenummer: 17168421.0
(22) Anmeldetag: 27.04.2017
(51) Int. Cl.: E01C 7/35

(54) **OBERFLÄCHENBELAG**
SURFACE COVERING
REVÊTEMENT DE SURFACE

(30) Priorität: 27.04.2016 AT 5006516 U
(43) Veröffentlichungstag der Anmeldung: 01.11.2017
(73) Patentinhaber: Flexiskin GmbH, 1220 Wien (AT)
(72) Erfinder: ROJEK, Helmut, 1220 Wien (AT)
(74) Vertreter: Sonn & Partner Patentanwälte

(56) Entgegenhaltungen:
- DE-A1- 4 416 836
- JP-A- 2007 009 592
- US-A1- 2006 083 897
- US-A1- 2014 141 239

## Beschreibung

Die Erfindung betrifft einen Oberflächenbelag, insbesondere einen Bodenbelag, sowie ein Verfahren zur Herstellung oder Instandsetzung eines solchen Oberflächenbelags. Genauer betrifft die Erfindung ein Oberflächenschutzsystem, insbesondere für Verkehrsflächen und Abstellplätze, beispielsweise in Garagen. Der Oberflächenbelag kann als Garagenbelag oder als Garagenbeschichtungssystem verwendet werden.

Bei Oberflächen eines Betonuntergrunds oder eines bituminösen Untergrunds stellt sich bekanntlich das Problem, dass diese Materialien besonders anfällig für Schäden und Rissbildung aufgrund eindringender Feuchtigkeit und chemischer Einflüsse sind. Derartige Einflüsse bestehen insbesondere für die Nutzflächen in Garagen. Im Stand der Technik werden daher bereits Garagenbeläge auf Basis von Kunstharzen zur Abdichtung der Oberflächen vorgeschlagen.

Derartige Kunstharz-Beläge haben den Vorteil, dass damit eine Abdichtung der Oberfläche gegen ein Eindringen von Feuchtigkeit oder Chemikalien in einen darunter liegenden Untergrund erzielt wird. Die Verwendung von Kunstharzen als Oberflächenbelag führt jedoch zu einer geringeren Rutschsicherheit im Vergleich zum unbeschichteten Untergrund. Als Rutschsicherheit wird hier ein erhöhter Gleitwiderstand auf Böden verstanden, um mehr Trittsicherheit beim gehen zu haben und die Schleudergefahr beim Bewegen von Kraftfahrzeugen zu reduzieren.

Zur Lösung dieses Problems wurde im Stand der Technik bereits vorgeschlagen, eine körnige Einstreuung im Kunstharz-Belag vorzusehen. Beispielsweise offenbart die CN 103013312 A eine Beschichtung mit einem Anti-Rutsch-Zuschlag aus Siliziumcarbid oder Gummi. Eine solche Einstreuung hat jedoch andererseits den Nachteil, dass dadurch die Fähigkeit des Belages zur Rissüberbrückung gesenkt wird. An den Oberflächen des Kunstharz-Belages können neben den Körnern der Einstreuung bereits bei vergleichsweise geringer Belastung Risse entstehen. Durch diese Risse können Feuchtigkeit und Chemikalien in den Untergrund vordringen und diesen beschädigen. Weiters wird durch die Risse die Einstreuung gelockert, sodass diese durch die laufende Belastung und Nutzung ausbricht. Aufgrund dieser Nachteile kann der Belag seinen Zweck nicht oder nur unzureichend bzw. nur während eines relativ begrenzten Nutzungszeitraumes erfüllen.

Die US 2006/0083897 A1 zeigt eine Deckschicht aus langsam erstarrendem Polyharnstoff mit einem eingebetteten Aggregat, wobei eine Oberfläche einer Stützstruktur zuerst mit der Polyharnstoff-Schicht überzogen wird und anschließend Aggregat ausgestreut wird, sodass dieses einsickert.

Die EP 1033440 A1 offenbart einen Bodenbelag mit einer Sperrschicht und einem darüber liegenden Verschleißbelag. Der Verschleißbelag kann ein Granulat als Einstreuung beinhalten. Zwischen Sperrschicht und Verschleißbelag kann als dritte Schicht eine besandete Haftschicht vorgesehen sein.

In der DE 29624230 U1 ist eine Bodenbeschichtung mit zwei Polyurethanschichten gezeigt, wobei die obere Schicht eine Einstreuung aufweist.

Es ist Aufgabe der Erfindung, einen Oberflächenbelag vorzuschlagen, welcher gegenüber bekannten Belägen eine längere Nutzungsdauer ermöglicht.

Die Erfindung löst diese Aufgabe mit einem Oberflächenbelag nach Anspruch 1. D.h. die Dichtschicht (auch als "Membran" bezeichnet) ist zwischen der Deckschicht und einem Untergrund, z.B. einem Betonuntergrund oder einem bituminösen Untergrund, angeordnet. Der Erfindung liegt die Erkenntnis zugrunde, dass ein günstigerer Kompromiss zwischen Abdichtung und Rutschsicherheit durch eine Trennung dieser beiden Aufgaben erreicht werden kann, wobei die beiden Aufgaben durch zumindest zwei verschiedene Schichten des Oberflächenbelags erfüllt werden. Die Abdichtung wird vorrangig durch die Dichtschicht erreicht, welche dementsprechend vorzugsweise im Wesentlichen keine Einstreuungen aufweist. Dadurch erreicht die Dichtschicht eine vergleichsweise höhere Rissfestigkeit bzw. rissüberbrückende Eigenschaften. Um dennoch eine hohe Rutschsicherheit zu erzielen, ist oberhalb der Dichtschicht eine Deckschicht mit einem körnigen Zuschlagstoff vorgesehen. Die Deckschicht weist demnach eine höhere Rutschsicherheit im Vergleich zur Dichtschicht auf. Als Zuschlagstoff in der Deckschicht können z.B. Granulate oder Perlen verwendet werden. Vorzugsweise wird ein mineralischer Zuschlagstoff mit unterschiedlichen Korngrößen verwendet. Durch die Strukturierung der Unterseite der Deckschicht wird eine vertikal unterschiedliche Lage der Körner des Zuschlagstoffes in der Deckschicht erzielt. Im Bereich der Täler der Struktur ist die Deckschicht vergleichsweise dünner, sodass die Körner in diesem Bereich näher bei der Oberfläche liegen. Im Bereich der Täler der Struktur ist die Deckschicht dicker die Körner liegen somit im Mittel tiefer im Oberflächenbelag. Da die Schichtdicke der Deckschicht im Bereich der Erhebungen kleiner oder gleich der maximalen Korngröße des Zuschlagstoffes ist, tragen die Körner des Zuschlagstoffes in diesen Bereichen bereits unmittelbar nach der Herstellung zur Rutschsicherheit bei. Die Körner des Zuschlagstoffes treten aus dem Kunstharz hervor und verleihen der Oberfläche der Deckschicht eine Struktur. Wenn die Deckschicht mitsamt des Zuschlagstoffes in den dünneren Bereichen abgetragen ist, treten zunehmend die Körner in den ursprünglich dickeren Bereichen hervor und gewährleisten weiterhin eine hohe Rutschsicherheit. Auf diese Weise kann die Verwendungsdauer der Deckschicht gegenüber einer Deckschicht mit einer überall gleichen Position der Körner verlängert werden. Eine solche Verlängerung könnte grundsätzlich alternativ durch Erhöhung der Schichtdicke erzielt werden, worunter jedoch die Rutschsicherheit leiden würde, weil die Körner des Zuschlagstoffes im Kunstharz "versinken". Weiters könnte alternativ eine Strukturierung nur der Oberseite (d.h. nicht der Unterseite und der Oberseite) der Deckschicht versucht werden. Dadurch würden allerdings in den weiter außen (oben) liegenden dickeren Bereichen die Körner versinken und die Rutschsicherheit des Belags reduzieren. Durch die Strukturierung zumindest der Unterseite der Deckschicht wird demgegenüber eine verteilte Abnutzung der Deckschicht erzielt, sodass über einen längeren Zeitraum Körner des Zuschlagstoffes nahe der Oberfläche des Belags angeordnet sind. Darüber hinaus kann ein mechanisch vergleichsweise widerstandsfähiger Zuschlagstoff auch zur Verbesserung der Verschleißbeständigkeit des Oberflächenbelags beitragen. Die beiden Schichten zusammen bilden einen elastischen, rissüberbrückenden und abdichtenden Kunststoffbelag mit hoher Rutschsicherheit. Dieser Belag eignet sich besonders als direkt befahrbare Abdichtung mit hohem Verschleißwiderstand, beispielsweise für Park- und Fahrflächen, wodurch eine besonders lange Nutzungsdauer des Oberflächenbelags ermöglicht wird.

Dementsprechend löst die Erfindung die oben genannte Aufgabe mit einem Verfahren zur Herstellung eines Oberflächenbelags nach Anspruch 7. Der Zuschlagstoff kann beispielsweise unmittelbar vor dem Aufbringen der Deckschicht beigegeben werden. Beim Sprenkeln eines schnell härtenden Kunstharzes behalten die gebildeten Tropfen ihre unterschiedlichen Formen und Größen auch noch nach dem Auftreffen auf eine Zieloberfläche (z.B. die Oberfläche der Dichtschicht) bei und härten in dieser Form und Größe aus. Es entsteht somit auf natürliche Weise eine Struktur mit Tälern und Erhebungen. Die Höhendifferenz dieser Struktur kann im Wesentlichen durch die Einstellung einer Sprenkeldüse beeinflusst werden. Im Unterschied zur Strukturschicht kann die Dichtschicht z.B. mit einer feinen Düse gesprüht werden, sodass eine ebene Oberfläche entsteht; alternativ, falls die Struktur Teil der Dichtschicht sein soll, kann auch die gesamte Dichtschicht mittels Sprenkeln hergestellt werden. Dabei ist jedoch die Kontrolle der Höhendifferenz der gebildeten Struktur schwieriger.

In analoger Weise löst die Erfindung die oben genannte Aufgabe mit einem Verfahren zur Instandsetzung (auch als "Ertüchtigung" bezeichnet) eines Oberflächenbelags nach Anspruch 8. Grundsätzlich ist davon auszugehen, dass eine Instandsetzung bzw. Ertüchtigung eines Oberflächenbelags dann besonders schwierig und aufwendig wird, wenn der darunter liegende Betonuntergrund oder bituminöse Untergrund oder die Abstreuung von bisher verwendeten Beschichtungen beschädigt wurden. In diesem Fall muss zunächst der beschädigte Untergrund abgetragen werden, bevor einer neuer Aufbau beginnen kann. Bei dem vorliegenden Oberflächenbelag sollte daher eine Instandsetzung vorgenommen werden, sobald die Deckschicht des Oberflächenbelags abgetragen ist und wenn der Verschleiß der Dichtschicht begonnen hat. In diesem Fall ermöglicht das vorgeschlagene Verfahren zur Instandsetzung eine rasche Wiederaufnahme der Nutzung der Oberfläche, da der Untergrund nicht saniert werden muss.

Im Zusammenhang mit dem vorliegenden Oberflächenbelag hat es sich als günstig herausgestellt, wenn zwischen der Dichtschicht und der Deckschicht eine Strukturschicht auf Basis eines dritten Kunstharzes angeordnet ist, wobei eine Oberseite der Strukturschicht entsprechend der Unterseite der Deckschicht umgekehrt strukturiert ist. D.h. die Erhebungen der Strukturschicht stehen mit den Tälern der Deckschicht in Eingriff und umgekehrt. Die Strukturschicht kann insbesondere eine körnige Struktur aufweisen, welche allerdings nicht durch eine (körnige) Einstreuung gebildet ist. Eine solche Strukturschicht ermöglicht eine einfache Herstellung der zumindest an der Unterseite strukturierten Deckschicht, indem diese auf die früher hergestellte Strukturschicht aufgebracht wird.

Alternativ zu einer eigens vorgesehenen Strukturschicht kann eine Oberseite der Dichtschicht entsprechend der Unterseite der Deckschicht umgekehrt strukturiert sein.

Die Dichtschicht und/oder die Strukturschicht des Oberflächenbelags können/kann vorzugsweise aus einem Beschichtungsmaterial auf Basis von Polyharnstoff (Polyurea) gebildet sein. D.h. das erste und/oder dritte Kunstharz kann Polyurea sein. Alternativ kann auch ein anderes schnell härtendes Kunstharz anstelle von Polyurea verwendet werden, z.B. Polyaspartic. Die Dichtschicht und/oder die Strukturschicht können beispielsweise zumindest zu 90% aus Polyurea bestehen. Polyurea hat den Vorteil einer sehr geringen Reaktionszeit von zwischen 4 und 15 Sekunden. Dadurch wird ein rascher Aufbau des Oberflächenbelags ermöglicht, sodass eine Nutzung der Oberfläche früher aufgenommen werden kann bzw. eine Stillstandszeit reduziert werden (z.B. auf 5-12 Stunden bei Ertüchtigungen). Wenn sowohl die Dichtschicht als auch die Strukturschicht auf Basis von Polyurea hergestellt sind, kann eine besonders zuverlässige Verbindung zwischen den Schichten erreicht werden. Die Dichtschicht kann vorzugsweise eine Schichtdicke von zumindest 2 mm aufweisen, wodurch besonders gute Dichteigenschaften und eine hohe Rissfestigkeit erzielt werden.

Im Zusammenhang mit den erfindungsgemäßen Verfahren ist es vorteilhaft, wenn das dritte Kunstharz Polyurea ist.

Weiters ist es günstig, wenn die Dichtschicht und/oder die Strukturschicht ein Flammschutzmittel umfassen. Das Flammschutzmittel (z.B. Blähgraphit und/oder chemische Zusätze) kann jeweils dem Beschichtungsmaterial beigegeben werden. Es dient der Einhaltung von Brandschutz-Vorschriften, z.B. der "OIB-Richtlinien" des Österreichischen Instituts für Bautechnik betreffend Brandschutz und auch der einschlägigen EN-Normen für Garagenbeläge. Das Flammschutzmittel ist vorzugsweise speziell für die jeweilige Anwendung und Nutzung, z.B. für Garagenbeläge, formuliert.

Es hat sich als besonders vorteilhaft herausgestellt, wenn der Zuschlagstoff (als Beigabe) in der Deckschicht Glasperlen oder Glaskörner umfasst. Die Glasperlen oder Glaskörner bestehen vorzugsweise aus mineralischem Glas, welches härter als Quarzsand oder Quarzzuschlag ist und daher derartigen Einstreuungen hinsichtlich der Abriebfestigkeit überlegen ist. Eine mit einem Zuschlagstoff aus Glas versehene Deckschicht erzielt daher eine besonders hohe Verschleißbeständigkeit.

Durch Wahl eines geeigneten Korngrößenbereichs kann eine gewünschte Einstellung des Verschleißes und der Rutschfestigkeit erzielt werden. Ein bevorzugter Korngrößenbereich ist von 0,1-0,8 mm oder von 0,1-0,7 mm. Ein besonders bevorzugter Korngrößenbereich ist von 0,6-1,0 mm, insbesondere eine Korngröße von etwa 0,8 mm. Als weiterer Vorteil können die Glasperlen oder Glaskörner für unterschiedliche Abschnitte des Oberflächenbelags unterschiedlich eingefärbt oder getönt sein und somit für die Markierung von Flächenabgrenzungen, Gehwegen oder zur Verkehrsleitung eingesetzt werden.

Die Deckschicht ist aus einem Beschichtungsmaterial auf Basis von Polyaspartic gebildet. D.h. das zweite Kunstharz soll Polyaspartic sein oder alternativ ein anderes schnell härtendes und vorzugsweise abriebbeständiges Kunstharz, z.B. Polyurea. Polyaspartic hat den Vorteil, dass es weniger vergilbt und außerdem vergleichsweise härter ist; andererseits ist es vergleichsweise teuer in der Anschaffung. Aus technischer Sicht kann Polyaspartic sowohl für die Deckschicht als auch für die Dichtschicht verwendet werden. Die minimale Schichtdicke (d.h. in den dünnsten Bereichen) der Deckschicht beträgt günstiger Weise zwischen 0,3 und 0,7 mm, vorzugsweise etwa 0,35-0,45 mm. Der Anteil des körnigen Zuschlagstoffes an der Deckschicht ist kleiner als 30 Vol.-%, insbesondere zwischen 10 und 20 Vol.-%. Durch die Verwendung von Polyaspartic für die Deckschicht kann eine hochverschleißfeste Oberfläche des Oberflächenbelags erzielt werden. Der Oberflächenbelag ist dadurch extrem abriebbeständig, leicht zu reinigen und ermöglicht eine besonders lange Nutzungsdauer.

Die Erfindung wird nachfolgend anhand eines besonders bevorzugten Ausführungsbeispiels, auf das sie jedoch nicht beschränkt sein soll, und unter Bezugnahme auf die Zeichnung noch weiter erläutert. Dabei zeigt im Einzelnen:

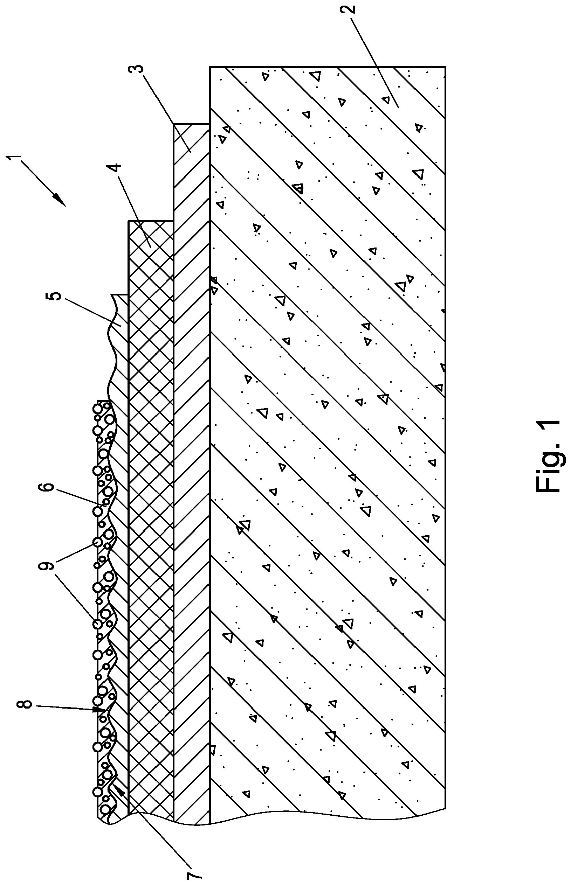

Fig. 1 eine schematische Schnittansicht eines Schichtaufbaus eines erfindungsgemäßen Oberflächenbelags.

Fig. 1 zeigt einen erfindungsgemäßen Oberflächenbelag 1 auf einem Betonuntergrund 2. Der Betonuntergrund 2 bildet das Substrat, auf dem der Oberflächenbelag 1 hergestellt ist. Vor der Herstellung des Oberflächenbelags 1 wird der Betonuntergrund durch Fräsen, Kugelstrahlen oder Schleifen vorbereitet.

Der Oberflächenbelag 1 umfasst eine Grundierung 3, eine Dichtschicht 4, eine Strukturschicht 5 und eine Deckschicht 6. Die Dichtschicht 4 ist auf der auf dem Betonuntergrund 2 aufgebrachten Grundierung 3 angeordnet. Über der Dichtschicht 4 ist die Strukturschicht 5 und die Deckschicht 6 angeordnet.

Das Material der Grundierung 3 ist eine Basis aus Epoxidharz oder Polyurethan mit einer Quarzsandabstreuung. Die Grundierung 3 dient der Haftungsvermittlung und der Schubkraftübertragung zwischen dem Betonuntergrund 2 und der Dichtschicht 4. Die wird z.B. unter Verwendung eines 2-Komponenten Flüssigkunststoffes hergestellt und kann eine oder mehrere Lagen umfassen. Sie dient auch dem Oberflächenausgleich des Betonuntergrunds 2.

Die als Abdichtung fungierende Dichtschicht 4 und die Strukturschicht 5 sind aus einem Beschichtungsmaterial auf Basis von Polyurea gebildet, dem ein Flammschutzmittel bzw. Brandschutzmittel zugesetzt ist. Das Beschichtungsmaterial kann z.B. als 2-Komponenten Kunststoff hergestellt werden. Die Schichtdicke der Dichtschicht 4 beträgt etwa 2 mm.

Die Strukturschicht 5 ist zwischen der Dichtschicht 4 und der Deckschicht 6 angeordnet. Die Oberseite 8 der Strukturschicht 5 ist entsprechend der Unterseite 7 der Deckschicht 6 umgekehrt strukturiert.

Die Deckschicht 6 ist aus einem Beschichtungsmaterial auf Basis von Polyaspartic gebildet, wobei das Beschichtungsmaterial einen körnigen Zuschlagstoff 9 aus Glasperlen oder Glaskörnern zur Verbesserung der Rutschsicherheit und der Verschleißbeständigkeit des Oberflächenbelags aufweist. Die Unterseite 7 der Deckschicht 6 ist strukturiert, wobei die Höhendifferenz zwischen den Erhebungen und den Tälern der Struktur der Unterseite etwa 0,8 mm beträgt. An den dünnsten Stellen beträgt die Schichtdicke der Deckschicht 6 etwa 0,35mm.

## Patentansprüche

1. Oberflächenbelag (1) umfassend:
eine Dichtschicht (4) auf Basis eines ersten Kunstharzes und
eine über der Dichtschicht (4) angeordnete Deckschicht (6) auf Basis eines zweiten Kunstharzes,
wobei die Deckschicht (6) einen körnigen Zuschlagstoff zur Verbesserung der Rutschsicherheit und/oder der Verschleißbeständigkeit des Oberflächenbelags (1) aufweist, der körnige Zuschlagstoff als Beimischung mit der Deckschicht (6) aufgebracht wurde und der Anteil des körnigen Zuschlagstoffes an der Deckschicht (6) kleiner als 30 Vol.-% ist,
**dadurch gekennzeichnet, dass** zumindest eine Unterseite (7) der Deckschicht (6) strukturiert ist, wobei die Höhendifferenz zwischen den Erhebungen und den Tälern der Struktur der Unterseite (7) vorzugsweise kleiner oder gleich der maximalen Korngröße des körnigen Zuschlagstoffes der Deckschicht (6) ist,
dass die Deckschicht (6) aus einem Beschichtungsmaterial auf Basis von Polyaspartic gebildet ist und
dass die Schichtdicke der Deckschicht (6) im Bereich der Erhebungen kleiner oder gleich der maximalen Korngröße des Zuschlagstoffes ist.

2. Oberflächenbelag (1) nach Anspruch 1,
**dadurch gekennzeichnet, dass** der körnige Zuschlagstoff in der Deckschicht (6) Glasperlen oder Glaskörner umfasst.

3. Oberflächenbelag (1) nach einem der Ansprüche 1 bis 2, **dadurch gekennzeichnet, dass** zwischen der Dichtschicht (4) und der Deckschicht (5) eine Strukturschicht (5) auf Basis eines dritten Kunstharzes angeordnet ist, wobei das dritte Kunstharz ein schnell härtendes Kunstharz ist, wobei eine Oberseite (8) der Strukturschicht (5) entsprechend der Unterseite (7) der Deckschicht (6) umgekehrt strukturiert ist.

4. Oberflächenbelag (1) nach Anspruch 3,
**dadurch gekennzeichnet, dass** das dritte Kunstharz ein Beschichtungsmaterial auf Basis von Polyurea ist.

5. Oberflächenbelag (1) nach einem der Ansprüche 1 bis 2,
**dadurch gekennzeichnet, dass** eine Oberseite der Dichtschicht entsprechend der Unterseite (7) der Deckschicht (6) umgekehrt strukturiert ist.

6. Oberflächenbelag (1) nach einem der Ansprüche 1 bis 5, **dadurch gekennzeichnet, dass** die Dichtschicht (4) und/oder die Strukturschicht (5) ein Flammschutzmittel umfassen.

7. Verfahren zur Herstellung eines Oberflächenbelags (1), das Verfahren umfassend die Schritte:
Aufbringen zumindest einer Dichtschicht (4) auf Basis eines ersten Kunstharzes,
Aufbringen einer Strukturschicht (5) auf Basis eines dritten Kunstharzes oberhalb der Dichtschicht mittels Sprenkeln, sodass eine Struktur mit Tälern und Erhebungen entsteht, wobei das dritte Kunstharz ein schnell härtendes Kunstharz ist, und
Aufbringen einer Deckschicht (6) auf Basis eines zweiten Kunstharzes oberhalb der Dichtschicht (4), wobei die Deckschicht (6) aus einem Beschichtungsmaterial auf Basis von Polyaspartic gebildet ist,
wobei die Deckschicht (6) einen körnigen Zuschlagstoff als Beimischung zur Verbesserung der Rutschsicherheit und/oder der Verschleißbeständigkeit des Oberflächenbelags (1) aufweist, wobei der Anteil des körnigen Zuschlagstoffes an der Deckschicht kleiner als 30 Vol-% ist, und die Schichtdicke der Deckschicht (6) im Bereich der Erhebungen kleiner oder gleich der maximalen Korngröße des Zuschlagstoffes ist.

8. Verfahren zur Instandsetzung eines Oberflächenbelags (1), das Verfahren umfassend die Schritte:
Anschleifen einer bestehenden Kunstharzbeschichtung, wobei eine unterhalb einer Deckschicht bestehende Dichtschicht zumindest teilweise erhalten bleibt;
Aufbringen zumindest einer neuen Dichtschicht auf Basis eines ersten Kunstharzes oberhalb der bestehenden Dichtschicht (4) ;
Aufbringen einer Strukturschicht (5) auf Basis eines dritten Kunstharzes oberhalb der Dichtschicht mittels Sprenkeln, sodass eine Struktur mit Tälern und Erhebungen entsteht, wobei das dritte Kunstharz ein schnell härtendes Kunstharz ist; und
Aufbringen einer Deckschicht (6) auf Basis eines zweiten Kunstharzes oberhalb der neuen Dichtschicht, wobei die Deckschicht (6) aus einem Beschichtungsmaterial auf Basis von Polyaspartic gebildet ist,
wobei die Deckschicht (6) einen körnigen Zuschlagstoff als Beimischung zur Verbesserung der Rutschsicherheit und/oder der Verschleißbeständigkeit des Oberflächenbelags (1) aufweist, wobei der Anteil des körnigen Zuschlagstoffes an der Deckschicht kleiner als 30 Vol-% ist, und die Schichtdicke der Deckschicht (6) im Bereich der Erhebungen kleiner oder gleich der maximalen Korngröße des Zuschlagstoffes ist.

9. Verfahren nach Anspruch 7 oder 8,
**dadurch gekennzeichnet, dass** der körnige Zuschlagstoff in der Deckschicht (6) Glasperlen oder Glaskörner umfasst.

10. Verfahren nach einem der Ansprüche 7 bis 9, **dadurch gekennzeichnet, dass** das dritte Kunstharz ein Beschichtungsmaterial auf Basis von Polyurea ist.

## Claims

1. Surface covering (1) comprising:
a sealing layer (4) based on a first synthetic resin and a cover layer (6), arranged above the sealing layer (4), based on a second synthetic resin, the cover layer (6) comprising a granular aggregate for improving the slip resistance and/or the wear resistance of the surface covering (1), the granular aggregate having been applied as an admixture with the cover layer (6) and the proportion of the granular aggregate with respect to the cover layer (6) being less than 30 vol.%, **characterised in that** at least an underside (7) of the cover layer (6) is structured, the height difference between the elevations and depressions of the structure of the underside (7) preferably being no greater than the maximum grain size of the granular aggregate of the cover layer (6), **in that** the cover layer (6) is made of a polyaspartic-based coating material, and **in that** the layer thickness of the cover layer (6) in the region of the elevations is no greater than the maximum grain size of the aggregate.

2. Surface covering (1) according to claim 1, **characterised in that** the granular aggregate in the cover layer (6) comprises glass beads or glass grains.

3. Surface covering (1) according to either claim 1 or claim 2, **characterised in that** a structural layer (5) based on a third synthetic resin is arranged between the sealing layer (4) and the cover layer (5), the third synthetic resin being a rapid-curing synthetic resin, a top side (8) of the structural layer (5) being structured inversely with respect to the underside (7) of the cover layer (6).

4. Surface covering (1) according to claim 3, **characterised in that** the third synthetic resin is a polyurea-based coating material.

5. Surface covering (1) according to either claim 1 or claim 2, **characterised in that** a top side of the sealing layer is structured inversely with respect to the underside (7) of the cover layer (6).

6. Surface covering (1) according to any of claims 1 to 5, **characterised in that** the sealing layer (4) and/or the structural layer (5) comprises a flame retardant.

7. Method for producing a surface covering (1), the method comprising the following steps:
applying at least one sealing layer (4) based on a first synthetic resin,
applying a structural layer (5) based on a third synthetic resin above the sealing layer by means of sprinkling so as to produce a structure of depressions and elevations, wherein the third synthetic resin is a rapid-curing synthetic resin, and
applying a cover layer (6) based on a second synthetic resin above the sealing layer (4),
wherein the cover layer (6) is made of a polyaspartic-based coating material,
wherein the cover layer (6) comprises a granular aggregate as an admixture for improving the slip resistance and/or the wear resistance of the surface covering (1), wherein the proportion of the granular aggregate with respect to the cover layer is less than 30 vol.%, and the layer thickness of the cover layer (6) in the region of the elevations is no greater than the maximum grain size of the aggregate.

8. Method for repairing a surface covering (1), the method comprising the following steps:
grinding an existing synthetic resin coating, wherein a sealing layer present beneath a cover layer is maintained at least in part;
applying at least one new sealing layer based on a first synthetic resin above the existing sealing layer (4),
applying a structural layer (5) based on a third synthetic resin above the sealing layer by means of sprinkling so as to produce a structure of depressions and elevations, wherein the third synthetic resin is a rapid-curing synthetic resin; and
applying a cover layer (6) based on a second synthetic resin above the new sealing layer, wherein the sealing layer (6) is made of a polyaspartic-based coating material,
wherein the cover layer (6) comprises a granular aggregate as an admixture for improving the slip resistance and/or the wear resistance of the surface covering (1), wherein the proportion of the granular aggregate with respect to the cover layer is less than 30 vol.%, and the layer thickness of the cover layer (6) in the region of the elevations is no greater than the maximum grain size of the aggregate.

9. Method according to either claim 7 or claim 8, **characterised in that** the granular aggregate in the cover layer (6) comprises glass beads or glass grains.

10. Method according to any of claims 7 to 9, **characterised in that** the third synthetic resin is a polyurea-based coating material.

## Revendications

1. Revêtement de surface (1) comprenant :
une couche d'étanchéité (4) à base d'une première résine synthétique et une couche de couverture (6) à base d'une seconde résine synthétique disposée au-dessus de la couche d'étanchéité (4),
où la couche de couverture (6) présente un agrégat granuleux pour l'amélioration de la sécurité contre le glissement et/ou de la résistance à l'usure du revêtement de surface (1), l'agrégat granuleux a été appliqué sous forme d'addition avec la couche de couverture (6) et la contribution de l'agrégat granuleux à la couche de couverture (6) est inférieure à 30 % en volume,
**caractérisé en ce qu'**au moins un côté inférieur (7) de la couche de couverture (6) est structuré, où la différence de hauteur entre les élévations et les vallées de la structure du côté inférieur (7) est de préférence inférieure ou égale à la taille de grain maximale de l'agrégat granuleux de la couche de couverture (6),
**en ce que** la couche de couverture (6) est formée à partir d'un matériau de revêtement à base de polyaspartique et
**en ce que** l'épaisseur de couche de la couche de couverture (6) dans le domaine des élévations est inférieure ou égale à la taille de grain maximale de l'agrégat.

2. Revêtement de surface (1) selon la revendication 1,
**caractérisé en ce que** l'agrégat granuleux dans la couche de couverture (6) comprend des perles de verre ou des grains de verre.

3. Revêtement de surface (1) selon l'une des revendications 1 à 2,
**caractérisé en ce que**, entre la couche d'étanchéité (4) et la couche de couverture (5) est disposée une couche de structure (5) à base d'une troisième résine synthétique, où la troisième résine synthétique est une résine synthétique à durcissement rapide, où un côté supérieur (8) de la couche de structure (5) est structuré inversement d'une manière correspondant au côté inférieur (7) de la couche de couverture (6).

4. Revêtement de surface (1) selon la revendication 3,
**caractérisé en ce que** la troisième résine synthétique est un matériau de revêtement à base de polyurée.

5. Revêtement de surface (1) selon l'une des revendications 1 à 2,
**caractérisé en ce qu'**un côté supérieur de la couche d'étanchéité est structuré inversement d'une manière correspondant au côté inférieur (7) de la couche de couverture (6).

6. Revêtement de surface (1) selon l'une des revendications 1 à 5,
**caractérisé en ce que** la couche d'étanchéité (4) et/ou la couche de structure (5) comprennent un ignifugeant.

7. Procédé pour fabriquer un revêtement de surface (1), le procédé comprenant les étapes :
application d'au moins une couche d'étanchéité (4) à base d'une première résine synthétique,
application d'une couche de structure (5) à base d'une troisième résine synthétique au-dessus de la couche d'étanchéité par aspersion, de sorte qu'une structure avec des vallées et des élévations apparaît, où la troisième résine synthétique est une résine synthétique à durcissement rapide, et
application d'une couche de couverture (6) à base d'une seconde résine synthétique au-dessus de la couche d'étanchéité (4), où la couche de couverture (6) est formée à partir d'un matériau de revêtement à base de polyaspartique,
où la couche de couverture (6) présente un agrégat granuleux sous forme d'addition pour améliorer la sécurité contre le glissement et/ou la résistance à l'usure du revêtement de surface (1),
où la contribution de l'agrégat granuleux à la couche de couverture est inférieure à 30 % en volume, et l'épaisseur de couche de la couche de couverture (6) dans le domaine des élévations est inférieure ou égale à la taille de grain maximale de l'agrégat.

8. Procédé pour la remise en état d'un revêtement de surface (1), le procédé comprenant les étapes :
ponçage d'un revêtement en résine synthétique existant, où une couche d'étanchéité existant au-dessous d'une couche de couverture demeure conservée au moins en partie ;
application d'au moins une nouvelle couche d'étanchéité à base d'une première résine synthétique au-dessus de la couche d'étanchéité existante (4) ;
application d'une couche de structure (5) à base d'une troisième résine synthétique au-dessus de la couche d'étanchéité par aspersion, de sorte qu'une structure avec des vallées et des élévations apparaît, où la troisième résine synthétique est une résine synthétique à durcissement rapide ; et
application d'une couche de couverture (6) à base d'une seconde résine synthétique au-dessus de la nouvelle couche d'étanchéité, où la couche de couverture (6) est formée à partir d'un matériau de revêtement à base de polyaspartique,
où la couche de couverture (6) présente un agrégat granuleux sous forme d'addition pour améliorer la sécurité contre le glissement et/ou la résistance à l'usure du revêtement de surface (1),
où la contribution de l'agrégat granuleux à la couche de couverture est inférieure à 30 % en volume, et l'épaisseur de couche de la couche de couverture (6) dans le domaine des élévations est inférieure ou égale à la taille de grain maximale de l'agrégat.

9. Procédé selon la revendication 7 ou 8,
**caractérisé en ce que** l'agrégat granuleux dans la couche de couverture (6) comprend des perles de verre ou des grains de verre.

10. Procédé selon l'une des revendications 7 à 9, **caractérisé en ce que** la troisième résine synthétique est un matériau de revêtement à base de polyurée.
